# EUROPÄISCHE PATENTSCHRIFT

(11) **EP 1 857 028 B1**
(45) Veröffentlichungstag und Bekanntmachung des Hinweises auf die Patenterteilung: **05.08.2009**
(21) Anmeldenummer: 07108200.2
(22) Anmeldetag: 15.05.2007
(51) Int. Cl.: A47J 31/44

(54) **Milchaufschäumdüse**
Milk foaming nozzle
Buse pour mousser le lait

(30) Priorität: 18.05.2006 DE 102006023450
(43) Veröffentlichungstag der Anmeldung: 21.11.2007
(73) Patentinhaber: BSH Bosch und Siemens Hausgeräte GmbH, 81739 München (DE)
(72) Erfinder: Kramer, Sigmund, 83417, Kirchanschöring (DE); Crump, Nicole, 83278 Traunstein (DE); Meyer, Brigitte, 83339 Chieming (DE)

(56) Entgegenhaltungen:
- EP-A- 1 430 819
- DE-C2- 19 705 633

## Beschreibung

Die vorliegende Erfindung betrifft eine Vorrichtung zum Zubereiten von Milchschaum mit einem Gehäuse und mit folgenden darin angeordneten, fluidführenden Komponenten: einer Aufschäumkammer, einer in die Aufschäumkammer mündenden Wasserdampfleitung, einer vor der Aufschäumkammer in die Wasserdampfleitung einmündenden Milchleitung, einer an der Einmündung der Milchleitung in die Wasserdampfleitung angeordneten Mischkammer, deren Ablauf in die Aufschäumkammer mündet, und einer Ableitung für Milchschaum aus der Aufschäumkammer. Über die Milchleitung oder separat kann der Vorrichtung Luft zugeführt werden, so dass zusammen mit dem Wasserdampf ein für die Milchschaumzubereitung optimales Wasserdampf-Milch-Luft-Gemisch entsteht. Eine derartige Vorrichtung kann zum Beispiel an einer Kaffeemaschine zum Einsatz kommen.

Aus der DE 197 056 33 C2 ist eine Vorrichtung zur Erzeugung von Milchschaum bekannt. Sie zeigt eine rohrförmige Ausführungsform, die aus vielen kleinen Einzelteilen besteht. Eine Reinigung dieser Vorrichtung ist sehr kompliziert und umständlich, da zur gründlichen Reinigung alle Teile auseinander genommen werden müssen. Erfolgt dies nicht, besteht die Gefahr, dass verbleibende Milchreste säuern und verderben können und dadurch keine ausreichende Hygiene gewährleistet ist. Zudem können Milchreste zu einem Funktionsverlust führen. Ein weiterer Nachteil besteht darin, dass kleine Einzelteile bei der Demontage leicht verloren gehen können und die Vorrichtung dadurch unbrauchbar wird.

Dokument EP-A-1430819 offenbart eine Vorrichtung nach dem Oberbegriff des unabhängigen Anspruchs 1.

Die Aufgabe der vorliegenden Erfindung besteht darin, eine Vorrichtung der eingangs genannten Art anzugeben, die einen einfacheren Aufbau aufweist. Außerdem soll sie leichter zu reinigen sein.

Diese Aufgabe wird durch eine Vorrichtung mit den Merkmalen des Anspruchs 1 gelöst. Erfindungsgemäß weist das Gehäuse der Vorrichtung lediglich eine erste und eine zweite Schalenhälfte auf, die lösbar miteinander verbunden sind. Im Gegensatz zum Stand der Technik besteht das Gehäuse also im Wesentlichen aus zwei Teilen. Die Verwendung von nur zwei Schalenhälften stellt einen einfachen Aufbau der Vorrichtung dar.
Die beiden Schalenhälften und das daraus gebildete Gehäuse sind flach. Das Gehäuse weist also insgesamt eine geringe Einbautiefe auf. Seine äußere Form ist an sich beliebig und kann zum Beispiel im Wesentlichen der eines geraden Prismas entsprechen. Die Flachheit des Prismas ergibt sich durch eine große Grundfläche und eine geringe Höhe. Aufgrund dieses einfachen und flachen Aufbaus der Vorrichtung kann sie in andere Bauteile, wie zum Beispiel eine Gehäuseaußenwand, integriert werden. Eine der Schalenhälften kann auch in einer Wand eines anderen Bauteils ausgebildet sein, auf die dann lediglich die andere Schalenhälfte aufgesetzt wird. Die beiden Schalenhälften weisen ferner eine für deren Handhabung geeignete Größe auf, was die Montage und Demontage des Gehäuses vereinfacht. Weniger Einzelteile bedeuten außerdem weniger Kosten für deren Herstellung, einfachere Handhabung bei der Reinigung und weniger Aufwand im Reparaturfall.

Bei einer vorteilhaften Ausgestaltung der erfindungsgemäßen Vorrichtung sind die fluidführenden Komponenten in einer gemeinsamen Ebene nebeneinander angeordnet. Die gemeinsame Ebene ist vorzugsweise die Erstreckungsebene der Schalenhälften, weil die Vorrichtung dadurch eine besonders kompakte Bauform erhält. Bei prismaförmigem Aufbau kann die Ebene parallel zur Grundfläche des Prismas, einer Außenfläche des Gehäuses bzw. einer Schalenhälfte, angeordnet sein. Bevorzugt handelt es sich bei der Ebene um die Trennebene zwischen den beiden Schalen. Diese Anordnung erleichtert nicht nur die Herstellung der erfindungsgemäßen Vorrichtung, sondern auch die Reinigung der fluidführenden Komponenten, die alle in der gemeinsamen Ebene zugänglich sind.

Nach einer weiteren vorteilhaften Ausgestaltung der Erfindung sind die fluidführenden Komponenten in einer der beiden Schalenhälften angeordnet. Vorteil dieser Ausführungsform ist, dass mit der Herstellung von nur einer Schalenhälfte bereits alle fluidführenden Komponenten fertiggestellt und in ihrer für die Funktion erforderlichen Lage zueinander angeordnet sein können. Eine Montage von vielen und kleinen Einzelteilen ist somit nicht erforderlich. Die Herstellung dieser Schalenhälfte kann kostengünstig in einem Arbeitsgang beispielsweise auf einer CNC-Fräsmaschine oder durch Spritzgießen erfolgen. Die fluidführenden Komponenten sind in der Trennebene zwischen den beiden Schalenhälften offen und werden mit dem Aufsetzen der anderen Schalenhälfte geschlossen. Aus Kosten- und Gewichtsgründen kommen für die Schalenhälften bevorzugt leichte Materialien wie Leichtmetall oder Kunststoff zum Einsatz, die außerdem leicht zu bearbeiten sind.

Für die Reinigung der erfindungsgemäßen Vorrichtung ist es notwendig, dass das Gehäuse zerlegt werden kann. Die beiden Schalenhälften sind lösbar miteinander verbunden. Die lösbare Verbindung ermöglicht das schnelle und einfache Trennen der beiden Schalenhälften im Reinigungsfall. Die fluidführenden Komponenten sind dann für Reinigungsmaßnahmen frei zugänglich. Die Schalenhälften können ferner aus einem transparenten Material gefertigt sein. Ist die Vorrichtung an einer dem Benutzer zugewandten Seite der Kaffeemaschine platziert, kann dieser Verschmutzungen in den fluidführenden Komponenten leicht erkennen. Da eine Verunreinigung der fluidführenden Komponenten für einen Benutzer sofort sichtbar wird, kann eine Reinigung ganz bedarfsgerecht durchgeführt werden. Zum Reinigen der Vorrichtung muss, wenn überhaupt, nur die zweite Schalenhälfte, also ein einzelnes Bauteil, abgenommen werden. Die Demontage und Montage der abnehmbaren Schalenhälfte kann beispielsweise über eine Bajonettverbindung zwischen den beiden Schalenhälften sehr schnell und unkompliziert erfolgen.

Bei einer weiteren vorteilhaften Ausgestaltung der Erfindung ist eine der beiden Schalenhälften mit einem beweglichen Deckel ausgestattet, der zwischen zumindest zwei Stellungen verstellbar ist. Der Deckel übernimmt in dieser Ausführungsform die Funktion eines Bedienelements, mit welchem beispielsweise zwischen einer Milchschäumstellung und einer Reinigungsstellung umgeschaltet werden kann. Dazu kann der Deckel zum Beispiel einen vom Deckel nach innen abstehenden Riegel als Anschlagelement aufweisen, der in eine Ausnehmung in der anderen Schalenhälfte hineinragt. Der Riegel kann in einer nutförmigen Ausnehmung geführt sein. An den beiden Enden der Nut kann der Riegel anschlagen, wodurch zwei Endstellungen des Deckels definiert sind. Das Umschalten zwischen den beiden Stellungen kann durch Stellelemente bewirkt werden, die fluidführende Komponenten miteinander verbinden oder voneinander trennen. Dies kann ebenfalls durch ein riegelförmiges Element geschehen, so dass der oben erwähnte Riegel neben seiner Funktion als Anschlagelement zugleich als Stellelement dienen kann. Alternativ kann ein Stellelement zum Beispiel auch aus einem Bypass bestehen, der in der einen Stellung zwei Leitungen miteinander verbindet und in der anderen voneinander abkoppelt.

Die Verstellung zwischen der Milchschäumstellung und der Reinigungsstellung kann zum Beispiel durch eine Drehung des Deckels erfolgen. Dazu kann ein zum Benutzer weisender Griff am Deckel angeformt sein. Die Anschlag- bzw. Stellelemente sowie der Griff können einstückig am Deckel ausgebildet sein. Der Deckel kann so mit allen Funktionselementen in einem Arbeitsgang etwa als Spritzgussteil hergestellt werden.

Nach einer vorteilhaften Ausgestaltung der Erfindung bewirkt der Deckel in der Reinigungsstellung das Absperren der Milchleitung nahe ihrer Einmündung in die Wasserdampfleitung bzw. in die Mischkammer. Der Wasserdampf, der aus der Wasserdampfleitung in die Mischkammer einfließt, kann dann keine Milch mehr aus der Milchleitung ansaugen. Ausschließlich heißer Wasserdampf strömt also in der Reinigungsstellung aus der Wasserdampfleitung in die Mischkammer, von dort aus weiter in die Aufschäumkammer und durch die Ableitung in ein (geeignetes) Auffanggefäß. Auf diesem Weg reinigt er die genannten fluidführenden Komponenten. Dazu muss der Deckel nicht entfernt werden. Der Benutzer kann den Deckel so lange in der Reinigungsstellung belassen, bis die fluidführenden Komponenten frei von Milchresten sind. Bei einem transparenten Deckel kann er den Reinigungsvorgang zudem visuell überwachen.

Bei einer weiteren vorteilhaften Ausgestaltung der Erfindung zweigt von der Milchleitung vor deren Absperrung ein Reinigungsablauf ab, der gleichzeitig mit dem Absperren der Milchleitung geöffnet wird. Bei einer alternativen Ausgestaltung kann der Reinigungsablauf nahe der Milchleitung von dieser beabstandet angeordnet sein. Mit dem Absperren der Milchleitung kann bei dieser Ausgestaltung eine Verbindung zwischen dem Reinigungsablauf und der Milchleitung von einer Ausnehmung in Form eines Bypasses als Stellelement im Deckel hergestellt werden. Der Bypass lässt nur in der Reinigungsstellung die Verbindung entstehen. Die Absperrung leitet den Wasserdampf in die Mischkammer und dann weiter in die Aufschäumkammer. Der Wasserdampf verlässt die Aufschäumkammer durch die Ableitung. Wurde vorher noch das freie Ende der Milchleitung, das beim Milchschäumen in einem Milchbehälter hängt, mit der Ableitung der Aufschäumkammer verbunden, strömt nun der Wasserdampf weiter über das freie Ende der Milchleitung durch sie hindurch bis zur Absperrung und von dort weiter durch den Reinigungsablauf in das Auffanggefäß. In dieser Reinigungsstellung werden also sämtliche fluidführenden Komponenten einschließlich der gesamten Milchleitung gleichzeitig und bequem gespült bzw. gereinigt.

Zur Reinigung der gesamten Vorrichtung reicht es somit aus, dass der Benutzer zwischen der Milchschäumstellung und der Reinigungsstellung des Deckels umschaltet und zur Reinigung der gesamten Milchleitung deren freies Ende mit der Ableitung verbindet. Die Reinigung der Vorrichtung ist demnach mit wenigen Handgriffen einfach und schnell durchführbar. Bei sofortigem Reinigungsbetrieb nach jedem Milchschaumbetrieb kann regelmäßig auf ein Zerlegen der Vorrichtung zur Reinigung verzichtet werden.

Um den Mischvorgang zwischen Wasserdampf und Milch an der Einmündung der Milchleitung in die Wasserdampfleitung zu verbessern, ist an dieser Stelle die Mischkammer angeordnet. Sie hat außerdem die Funktion, beim Durchströmen des Wasserdampfs einen Unterdruck zu erzeugen, mit dem die Milch bzw. das Milch-Luft-Gemisch aus der Milchleitung angesaugt werden kann. Größe und Form der Mischkammer können den Unterdruck zum Ansaugen der Milch bzw. des Milch-Luft-Gemisches bestimmen. Die Form, die grundsätzlich frei wählbar ist, hat dabei den größten Einfluss auf den Mischvorgang. Nach einer vorteilhaften Ausführungsform kann die Mischkammer im Wesentlichen V-förmig sein. Versuche haben gezeigt, dass sich mit einer V- oder herzförmigen Mischkammer ein besonders gutes Wasserdampf-Milch-Luft-Gemisch erzielen lässt.

Nach einer weiteren vorteilhaften Ausführungsform der Erfindung bildet die Aufschäumkammer einen Ablaufwiderstand an ihrem Ausgang aus. Die Verweilzeit des in die Aufschäumkammer eingespritzten Wasserdampf-Milch-Luft-Gemischs kann somit gezielt auf einen bestimmten Wert eingestellt werden. Das Gemisch hat damit ausreichend Zeit, sich zu entspannen und den gewünschten Milchschaum zu bilden. Zur Ausbildung des Ablaufwiderstands kann im Bereich des Ablaufs der Aufschäumkammer eine Verengung und/oder Abwinkelung angeordnet sein.

Nachfolgend werden Ausführungsbeispiele der Erfindung anhand von Zeichnungen näher erläutert. Es zeigen:
- Figuren 1 und 2: perspektivische Ansichten der erfindungsgemäßen Vorrichtung;
- Figur 3: eine Ansicht der Vorrichtung von vorn in der Milchschäumstellung;
- Figur 4: die in Figur 3 gezeigte Ansicht der Vorrichtung in der Reinigungsstellung;
- Figur 5: eine Schnittdarstellung entsprechend der Schnittlinie II-II in Figur 4;
- Figur 6: eine Schnittdarstellung entsprechend der Schnittlinie III-III in Figur 4; und
- Figuren 7 und 8: Darstellungen der ersten, vorderen Schalenhälfte der Vorrichtung.

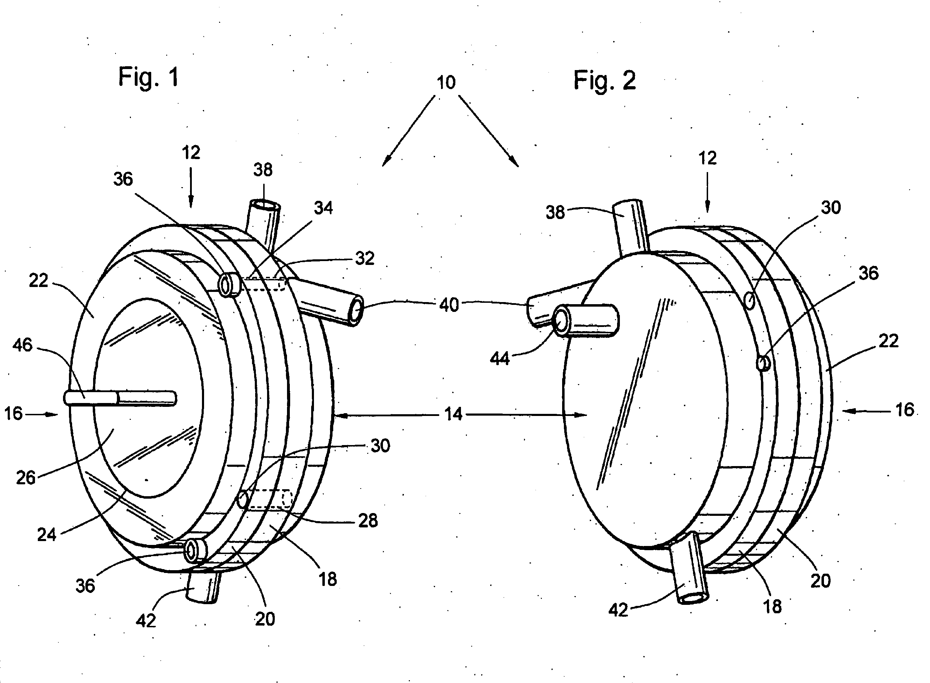

Die Figuren 1 und 2 zeigen die erfindungsgemäße Vorrichtung zum Zubereiten von Milchschaum 10 in einer Perspektivdarstellung, wobei Figur 1 eine Ansicht von vorn und Figur 2 eine Ansicht von hinten bietet. Die in Figur 1 und 2 gezeigte Vorrichtung 10 umfasst ein zweischaliges Gehäuse 12, das sich aus einer hinteren ersten Schalenhälfte 14 und einer vorderen zweitenr Schalenhälfte 16 zusammensetzt. An die hintere Schalenhälfte 14 ist ein ringförmiger Bund 18 angeformt, der flächig mit einem ebenfalls ringförmigen Bund 20 der vorderen Schalenhälfte 16 in Kontakt steht. Er ist Teil eines flanschförmigen Halterrings 22, der eine zentrale Ausnehmung 24 aufweist. In die Ausnehmung 24 ist ein beweglicher Deckel 26 formschlüssig eingesetzt. Sowohl zwischen dem Bund 18 und dem Bund 20 als auch zwischen dem Deckel 26 und dem Halterring 22 sind umlaufende Dichtungselemente vorgesehen, die in Figur 1 nicht dargestellt sind.

In jeden Bund 18, 20 sind zwei Stiftlöcher 28 eingearbeitet, in die je ein einzelner Zylinderstift 30 als Positionierhilfe der beiden Schalenhälften zueinander einsetzbar ist. Zusätzlich zu den Stiftlöchern 28 sind in den Bund 18 drei Gewindebohrungen 32 eingearbeitet. Der Bund 20 weist fluchtend zu den drei Gewindebohrungen 32 Durchgangsbohrungen 34 auf, durch die Kopfschrauben 36 in die Gewindebohrungen 32 zum Verbinden der beiden Schalenhälften eingeschraubt werden.

Die hintere Schalenhälfte 14 weist außerdem vier Ausnehmungen auf, in die schlauch- bzw. rohrförmige Anschlüsse 38, 40, 42 und 44 eingesetzt sind. Der Anschluss 38 dient zur Aufnahme einer Wasserdampfleitung, der Anschluss 40 zur Aufnahme einer Milchleitung, der Anschluss 42 zur Ableitung von Milchschaum und der Anschluss 44 zur Aufnahme eines Verbindungsschlauches mit einem Auffangbehälter der Kaffeemaschine.

Bei der Montage der Vorrichtung 10 werden die zwei Zylinderstifte 30 in den Bund 18 der hinteren Schalenhälfte 14 eingepresst. Danach wird der bewegliche Deckel 26 zentral auf der hinteren Schalenhälfte 14 positioniert und mit dem Halterring 22 fixiert. Der Deckel 26 hat dabei gerade so viel Spiel, dass er im Halterring 22 drehbar gehalten ist. Er weist einen Griff 46 auf, mit dem er manuell zwischen zwei Positionen drehbar ist. Bei der Montage des Halterrings 22 greifen die Zylinderstifte 30 in die Stiftlöcher 28 des Bunds 20 ein. Die Lage des Halterrings 22 zur hinteren Schalenhälfte 14 ist damit lagegenau fixiert. Jetzt kann der Halterring 22 mittels der drei Kopfschrauben 36 mit der hinteren Schalenhälfte 14 verschraubt werden.

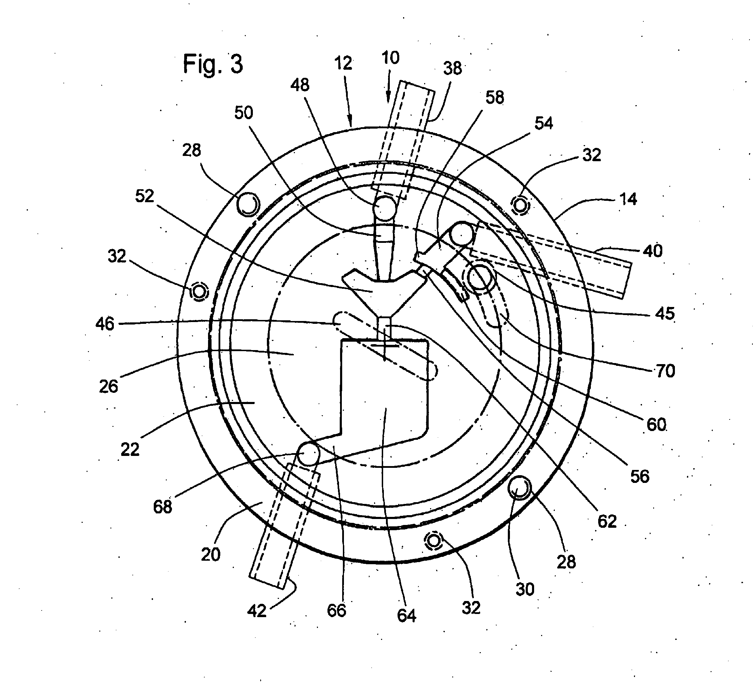

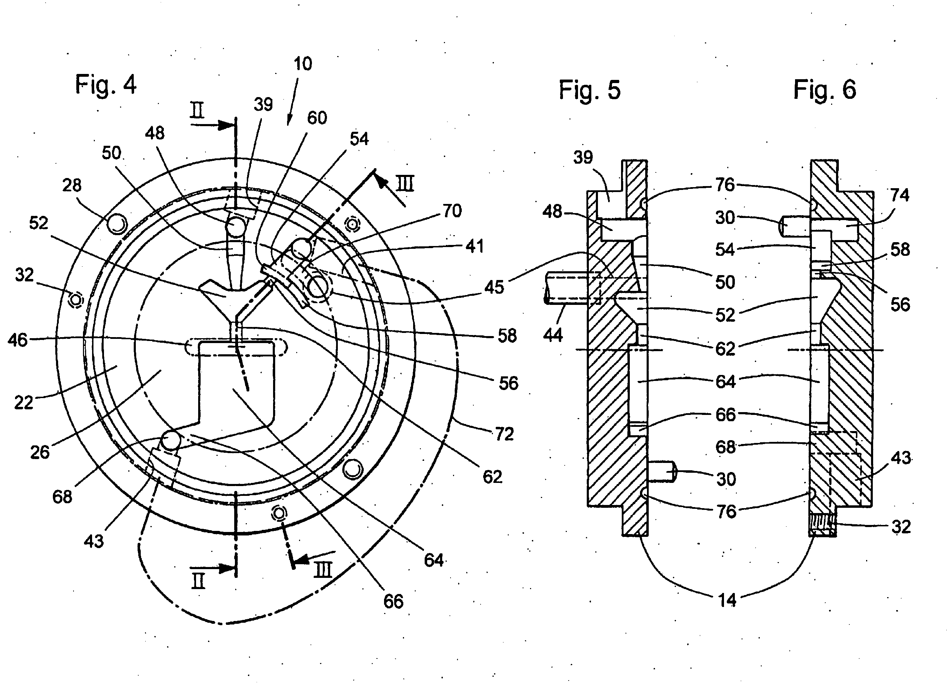

Die Figuren 3 und 4 zeigen die Vorrichtung 10 in einer Frontalansicht, bei der die fluidführenden Komponenten sichtbar sind. Das ist in Fließrichtung des Wasserdampfes zunächst der Anschluss 38, der in eine zylindrische Öffnung 39 (Fig. 4) eingesetzt ist. An die Öffnung 39 schließt sich eine rechtwinklig dazu angeordnete Bohrung 48 an, die in eine dazu ebenfalls rechtwinklig angeordnete Ausnehmung 50 mündet. Die Ausnehmung 50 weist stromab eine Verjüngung auf, die mit einer Mischkammer 52 in Verbindung steht. Die Mischkammer 52 mündet über einen Ablauf 62 stromab in eine Aufschäumkammer 64. Am Ende der Aufschäumkammer 64 befindet sich ein abgewinkelter Abschnitt 66, der in eine senkrecht dazu angeordnete Bohrung 68 mündet. Diese ist mit einer senkrecht dazu angeordneten zylindrischen Öffnung 43 (Fig. 4) verbunden, in die der Anschluss 42 eingesetzt ist. Die Mischkammer 52 steht außerdem über eine Verjüngung 56 mit einer Ausnehmung 54 in Verbindung. Quer zu dieser Verbindungsrichtung verläuft in der Ausnehmung 54 eine Nut 58. Die Ausnehmung 54 ist mit einer Öffnung 41 (Fig. 4) verbunden, in die der Anschluss 40 eingesetzt ist. Neben der Ausnehmung 54 ist eine weitere Öffnung 45 angeordnet, in die der Anschluss 44 eingesetzt ist.

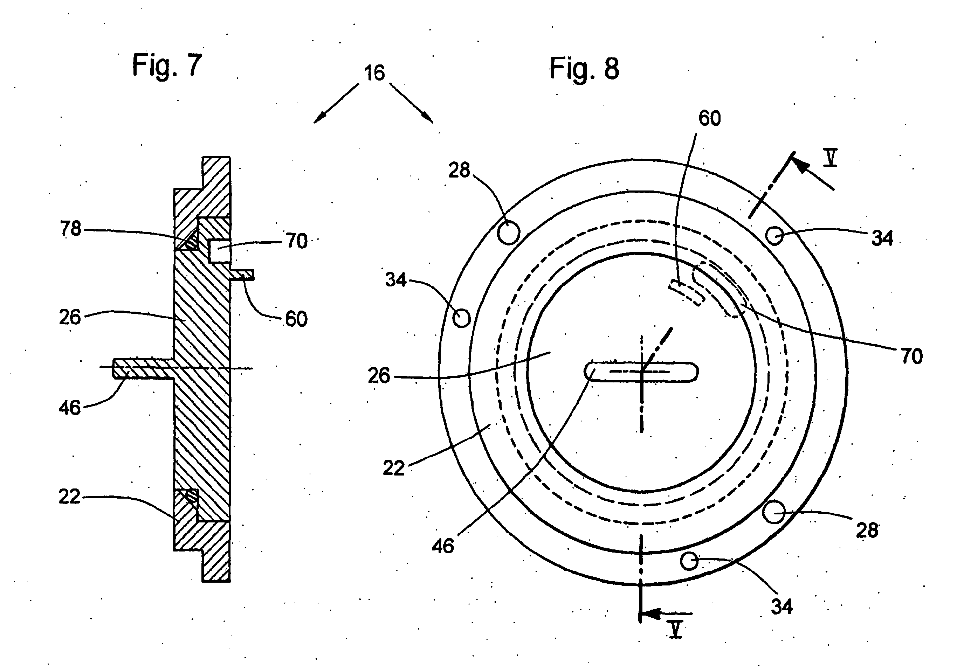

Die vordere Schalenhälfte 16 besteht aus dem Halterring 22 und dem Deckel 26 und ist in dieser Darstellung durch Strichpunktlinien angedeutet. Sie ist aus transparentem Kunststoff, die hintere Schalenhälfte 14 aus Leichtmetall hergestellt. Nähere Ausführungen zur vorderen Schalenhälfte 16 erfolgen zu den Figuren 7 und 8.

Figur 3 stellt die Milchschäumstellung des Deckels 26 dar. Bei der Zubereitung von Milchschaum strömt Wasserdampf über den Anschluss 38 durch die Bohrung 48 und die Ausnehmung 50 der Mischkammer 52. Er durchströmt die Mischkammer 52 und bewirkt an der Verjüngung 56 einen Unterdruck, der Milch bzw. ein Milch-Luft-Gemisch aus der Ausnehmung 54 in die Mischkammer 52 ansaugt und mit dem Wasserdampf vermischt. Dieses Wasserdampf-Milch-Luft-Gemisch wird unter Druck durch den Ablauf 62 in die Aufschäumkammer 64 gefördert. Dort kann sich das Gemisch entspannen und es entsteht der gewünschte Milchschaum. Der Milchschaum wird aus der Aufschäumkammer 64 über den Abschnitt 66 und durch die Bohrung 68 abgeführt. Vom Deckel 26 ragt ein daran angeformter Riegel 60 als Anschlag- und zugleich Stellelement in die Nut 58 hinein. In der dargestellten Stellung gibt er die Zufuhr von Milch in die Mischkammer 52 frei.

Figur 4 zeigt die Vorrichtung 10 aus der gleichen Richtung wie Figur 3. Im Unterschied zu Figur 3 stellt Figur 4 den Deckel 26 in seiner Reinigungsstellung dar. In dieser Stellung befindet sich der Riegel 60 des Deckels 26 am anderen Ende der Nut 58 und sperrt damit die Verbindung von der Ausnehmung 54 zur Mischkammer 52. Gleichzeitig stellt jetzt ein ovaler Bypass 70, der in den Deckel 26 eingearbeitet ist, eine Verbindung zwischen der Ausnehmung 54 und der Ausnehmung 45 her. Eine schlauchförmige Leitung 72 verbindet in der Reinigungsstellung die Öffnung 41 mit der Öffnung 43. Im Milchschäumbetrieb ist das mit der Öffnung 43 verbundene Ende der Leitung 72 ein freies Ende, das in ein Gefäß mit Milch eingetaucht ist. Zum Reinigen der fluidführenden Komponenten, die während des Milchschäumbetriebs mit Milch in Kontakt kommen, wird das freie Ende der Leitung 72 in der Reinigungsstellung mit der Öffnung 43 als Auslass verbunden.

Bei der Reinigung der Vorrichtung 10 wird Wasserdampf über die Öffnung 39, durch die Bohrung 48 und über die Ausnehmung 50 der Mischkammer 52 zugeführt. Deren Zulauf über die Verjüngung 56 ist jetzt durch den Riegel 60 gesperrt. Der Wasserdampf kann somit nach Ausbreitung in der Mischkammer 52 nur durch die Ausnehmung 62 in die Aufschäumkammer 64 gelangen. Die Mischkammer 52 und die Aufschäumkammer 64 werden auf diese Weise mit heißem Wasserdampf durchspült und gereinigt. Der Wasserdampf und gegebenenfalls die aus der Mischkammer 52 und der Aufschäumkammer 64 gelösten Milchreste gelangen über den Abschnitt 66 durch die Bohrung 68 und die Öffnung 43 in die Leitung 72, welche über die Öffnung 41 mit der Ausnehmung 54 verbunden ist. Von dort geht es weiter über den Bypass 70 in die Öffnung 45 und damit in Leitung 72, die mit einem in Figur 4 nicht dargestellten Auffanggefäß verbunden ist.

Auf diese Weise können mit wenigen Handgriffen alle fluidführenden Komponenten der Vorrichtung 10 gereinigt werden. Zur Umstellung von Milchschäum- auf Reinigungsbetrieb muss lediglich der Deckel von der Milchschäumstellung in die Reinigungsstellung verdreht und das freie Ende von der Leitung 72 (Milchleitung) mit der Öffnung 43 bzw. mit dem Anschluss 42 verbunden werden. Der ohnehin zur Zubereitung des Milchschaums zur Verfügung stehende Wasserdampf kann also ohne größeren technischen Aufwand zusätzlich zur Reinigung der Vorrichtung verwendet werden. Aufgrund seiner hohen Temperatur und seines Druckes ist er dafür besonders gut geeignet. Sollten trotz Wasserdampf-Reinigung Milchreste in der Vorrichtung 10 verbleiben, können sie durch einfaches Abnehmen des Halterrings 22 samt des Deckels 26 manuell entfernt werden. Durch das transparente Material des Deckels 26 und des Halterings 22 kann der Benutzer den Reinigungserfolg visuell überprüfen. Damit kann er auch die Länge eines Reinigungszyklus optimal bestimmen, da er sofort nach vollständiger Reinigung der Vorrichtung den Reinigungsvorgang beenden kann.

Die Figuren 5 und 6 zeigen Schnittdarstellungen der hinteren Schalenhälfte 14, wobei Figur 5 einen Schnitt entlang der Strichpunktlinie II-II und Figur 6 einen Schnitt entlang der Strichpunktlinie III-III in Figur 4 darstellt. Die folgenden Erläuterungen betreffen die Figuren 5 und 6 gemeinsam.

Sie verdeutlichen die Form der fluidführenden Komponenten in einer weiteren Schnittebene, die senkrecht zu der Schnittebene der Figuren 3 und 4 steht. Die hintere Schalenhälfte 14 weist zur Aufnahme eines Dichtungselements eine kreisförmig umlaufende Nut 76 auf. Das Dichtungselement hat die Funktion, die beiden Schalenhälften 14 und 16 gegeneinander abzudichten. Außerdem sind die in die hintere Schalenhälfte 14 eingepressten Zylinderstifte 30 und eine Gewindebohrung 32 dargestellt.

Die Figuren 5 und 6 zeigen außerdem, dass die Mischkammer 52 auch in der Tiefe eine V- bzw. Keilform aufweist. Bei Versuchen hat sich gerade diese dreidimensionale Form als besonders geeignet herausgestellt, um eine optimale Durchmischung von Wasserdampf und Milch zu erreichen. Die Form der Aufschäumkammer 64 dagegen ist für das Aufschäumergebnis weniger von Bedeutung, solange eine zum Aufschäumen notwendige Größe nicht unterschritten wird.

Die Figuren 5 und 6 verdeutlichen ebenfalls die Möglichkeit, die fluidführenden Komponenten in einem Arbeitsgang, beispielsweise durch Fräsen, aus der hinteren Schalenhälfte 14 herauszuarbeiten. Die Ausgestaltung und Anordnung der fluidführenden Komponenten ohne eingeschlossene Hohlräume und Hinterschneidungen ermöglicht auch die Herstellung durch Gießverfahren. Eine kostenaufwendige Erstellung von Gießkernen kann entfallen.

Die Figuren 7 und 8 zeigen den Deckel 26 samt Haltering 22. Die in Fig. 7 gezeigte Schnittdarstellung ist ein Schnitt entlang der in Figur 8 eingezeichneten Strichpunktlinie V-V. Der Deckel 26 weist zentral auf seiner Drehachse einen Drehgriff 46 auf. Zwischen dem Deckel 26 und dem Haltering 22 ist ein Dichtungsring 78 angeordnet. Auf der der hinteren Schalenhälfte 14 (Fig. 3, 4) zugewandten Seite des Deckels 26 befinden sich der Riegel 60 zum Absperren der Verbindung zwischen der Ausnehmung 54 und der Verjüngung 56 und der Bypass 70, der in der Reinigungsstellung die Verbindung zwischen der Ausnehmung 54 und der Öffnung 45 herstellt. In Figur 8 ist außerdem die Anordnung der Stiftlöcher 28 sowie der Durchgangsbohrungen 34 zur Aufnahme der Schrauben dargestellt.

Da es sich bei der vorhergehenden, detailliert beschriebenen Vorrichtung 10 um ein Ausführungsbeispiel handelt, kann es in üblicher Weise vom Fachmann in einem weitem Umfang modifiziert werden, ohne den Bereich der Erfindung zu verlassen. Insbesondere können die vordere und hintere Schalenhälfte in einer anderen Form ausgestaltet werden, wenn dies aus Platz- oder designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste:

- 10 -: Vorrichtung zum Zubereiten von Milchschaum
- 12 -: Gehäuse
- 14 -: hintere Schalenhälfte
- 16 -: vordere Schalenhälfte
- 18,20 -: Bund
- 22 -: Haltering
- 24 -: Ausnehmung
- 26 -: Deckel
- 28 -: Stiftloch
- 30 -: Zylinderstift
- 32 -: Gewindebohrung
- 34 -: Durchgangsbohrung
- 36 -: Kopfschraube
- 38 -: Anschluss für eine Wasserdampfleitung
- 40 -: Anschluss für eine Milchleitung
- 42 -: Anschluss zur Ableitung von Milchschaum
- 44 -: Anschluss für einen Reinigungsablauf
- 39, 41, 43, 45 -: Öffnungen
- 46 -: Griff
- 48 -: Bohrung
- 50 -: Ausnehmung
- 52 -: Mischkammer
- 54 -: Ausnehmung
- 56 -: Verjüngung
- 58 -: Nut
- 60 -: Riegel
- 62 -: Ablauf
- 64 -: Aufschäumkammer
- 66 -: Abschnitt
- 68 -: Bohrung
- 70 -: Bypass
- 72 -: Leitung
- 74: - Bohrung
- 76: - Nut
- 78: - Dichtungsring

## Patentansprüche

1. Vorrichtung (10) zum Zubereiten von Milchschaum, mit einem lediglich eine erste Schalenhälfte (14) und eine zweite Schalenhälfte (16) aufweisenden Gehäuse (12) und mit folgenden darin angeordneten, fluidführenden Komponenten: einer Aufschäumkammer (64), einer in die Aufschäumkammer (64) mündenden Wasserdampfleitung (38), einer vor der Aufschäumkammer (64) in die Wasserdampfleitung (38) einmündenden Milchleitung (40), einer an der Einmündung der Milchleitung (40) in die Wasserdampfleitung (38) angeordneten Mischkammer (52), deren Ablauf (62) in die Aufschäumkammer (64) mündet und einer Ableitung (42) für Milchschaum aus der Aufschäumkammer (64), **dadurch gekennzeichnet, dass** dass die beiden Schalenhälften (14, 16) lösbar miteinander verbunden sind.

2. Vorrichtung (10) nach Anspruch 1, **dadurch gekennzeichnet, dass** die fluidführenden Komponenten (38, 40, 42, 52, 62, 64) in einer gemeinsamen Ebene nebeneinander angeordnet sind.

3. Vorrichtung (10) nach Anspruch 1 oder 2, **dadurch gekennzeichnet, dass** die fluidführenden Komponenten (38, 40, 42, 52, 62, 64) im Wesentlichen in einer der beiden Schalenhälfte (14) angeordnet sind.

4. Vorrichtung (10) nach einem der vorhergehenden Ansprüche, **dadurch gekennzeichnet, dass** die eine Schalenhälfte (16) einen beweglichen Deckel (26) umfasst, der zwischen zumindest zwei Stellungen verstellbar ist.

5. Vorrichtung (10) nach Anspruch 4, **dadurch gekennzeichnet, dass** der Deckel (26) in einer der beiden Stellungen die Milchleitung (40) nahe ihrer Einmündung in die Wasserdampfleitung (38) absperrt.

6. Vorrichtung (10) nach Anspruch 5, **dadurch gekennzeichnet, dass** von der Milchleitung (40) vor deren Absperrung ein Reinigungsablauf (44) abzweigt, der nur bei gesperrter Milchleitung (40) geöffnet ist, und dass ein freies Ende der Milchleitung (40, 72) mit der Ableitung (42) verbindbar ist.

7. Vorrichtung (10) nach einem der vorhergehenden Ansprüche, **dadurch gekennzeichnet, dass** die Mischkammer (52) im Wesentlichen V-förmig ist.

8. Vorrichtung (10) nach einem der vorhergehenden Ansprüche, **dadurch gekennzeichnet, dass** die Aufschäumkammer (64) einen Ablaufwiderstand ausbildet.

9. Vorrichtung (10) nach Anspruch 8, **dadurch gekennzeichnet, dass** als Ablaufwiderstand im Bereich der Ableitung (42) der Aufschäumkammer eine Verengung und/oder Abwinkelung angeordnet ist.

## Claims

1. Device (10) for preparation of milk froth, with a housing (12) comprising merely a first casing half (14) and a second casing half (16) and with the following fluid-conducting components arranged therein: a frothing chamber (64), a water-steam duct (38) opening into the frothing chamber (64), a milk duct (40) opening into the water-steam duct (38) ahead of the frothing chamber (64), a mixing chamber (52), which is arranged at the opening of the milk duct (40) into the water-steam duct (38) and the outlet (62) of which opens into the frothing chamber (54) and a discharge duct (42) for milk froth from the frothing chamber (64), **characterised in that** the two casing halves (14, 16) are detachably connected together.

2. Device (10) according to claim 1, **characterised in that** the fluid-conducting components (38, 40, 42, 52, 62, 64) are arranged in a common plane adjacent to one another.

3. Device (10) according to claim 1 or 2, **characterised in that** the fluid-conducting components (38, 40, 42, 52, 62, 64) are arranged substantially in one of the two casing halves (14).

4. Device (10) according to any one of the preceding claims, **characterised in that** one of the casing halves (16) comprises a movable cover (26) adjustable between at least two settings.

5. Device (10) according to claim 4, **characterised in that** the cover (26) in one of the two settings blocks the milk duct (40) near the opening thereof into the water-steam duct (38).

6. Device (10) according to claim 5, **characterised in that** a cleaning outlet (44) which is opened only when the milk duct (40) is blocked branches from the milk duct (40) ahead of the blocking thereof and that a free end of the milk duct (40, 72) is connectible with the discharge duct (42).

7. Device (10) according to any one of the preceding claims, **characterised in that** the mixing chamber (52) is substantially V-shaped.

8. Device (10) according to any one of the preceding claims, **characterised in that** the frothing chamber (64) forms an outflow resistance.

9. Device (10) according to claim 8, **characterised in that** a constriction and/or bend is arranged as outflow resistance in the region of the discharge duct (42) of the frothing chamber.

## Revendications

1. Dispositif (10) pour la préparation de mousse de lait, comprenant un boîtier (12) présentant uniquement une première moitié de coque (14) et une seconde moitié de coque (16), et comprenant les composants suivants conducteurs de liquide et disposés dans le boîtier : une chambre de moussage (64), une conduite de vapeur d'eau (38) aboutissant dans la chambre de moussage (64), une conduite de lait (40) aboutissant dans la conduite de vapeur d'eau (38) devant la chambre de moussage (64), une chambre de mélange (52) disposée dans la conduite de vapeur d'eau (38) à l'embouchure de la conduite de lait (40), dont la sortie (62) aboutit dans la chambre de moussage (64) et une conduite d'évacuation (42) de la mousse de lait hors de la chambre de moussage (64), **caractérisé en ce que** les deux moitiés de coque (14, 16) sont raccordées entre elles de manière amovible.

2. Dispositif (10) selon la revendication 1, **caractérisé en ce que** les composants conducteurs de liquide (38, 40, 42, 52, 62, 64) sont essentiellement disposés les uns à côté des autres dans un plan commun.

3. Dispositif (10) selon la revendication 1 ou 2, **caractérisé en ce que** les composants conducteurs de liquide (38, 40, 42, 52, 62, 64) sont essentiellement disposés dans l'une des deux moitiés de coque (14).

4. Dispositif (10) selon l'une quelconque des revendications précédentes, **caractérisé en ce que** l'une des moitiés de coque (16) comprend un couvercle mobile (26) qui est réglable entre au moins deux positions.

5. Dispositif (10) selon la revendication 4, **caractérisé en ce que** le couvercle (26), dans l'une des deux positions, obture la conduite de lait (40) près de son embouchure dans la conduite de vapeur d'eau (38).

6. Dispositif (10) selon la revendication 5, **caractérisé en ce qu'**une sortie de nettoyage (44) se ramifie depuis la conduite de lait (40) en amont de l'obturation de celle-ci, cette sortie de nettoyage étant ouverte seulement lorsque la conduite de lait (40) est obturée, et **en ce qu'**une extrémité libre de la conduite de lait (40, 72) peut être raccordée à la conduite d'évacuation (42).

7. Dispositif (10) selon l'une quelconque des revendications précédentes, **caractérisé en ce que** la chambre de mélange (52) est essentiellement en forme de V.

8. Dispositif (10) selon l'une quelconque des revendications précédentes, **caractérisé en ce que** la chambre de moussage (64) forme une résistance d'évacuation.

9. Dispositif (10) selon la revendication 8, **caractérisé en ce qu'**un rétrécissement et/ou une partie repliée sont disposés dans la zone de la conduite d'évacuation (42) de la chambre de moussage en tant que résistance d'évacuation.
